# EUROPÄISCHE PATENTSCHRIFT

(11) **EP 2 614 112 B1**
(45) Veröffentlichungstag und Bekanntmachung des Hinweises auf die Patenterteilung: **05.11.2014**
(21) Anmeldenummer: 11755305.7
(22) Anmeldetag: 02.09.2011
(51) Int. Cl.: C08G 18/66, C08G 18/79, C08G 18/10, C08G 101/00, C08G 18/75, C08J 9/14, C08J 9/34, C08G 18/48

(54) **GESCHÄUMTE, LICHTECHTE POLYURETHANFORMTEILE**
FOAMED LIGHTFAST POLYURETHANE MOULDINGS
PIÈCES MOULÉES EN POLYURÉTHANE EXPANSÉ STABLES À LA LUMIÈRE

(30) Priorität: 07.09.2010 DE 102010040305
(43) Veröffentlichungstag der Anmeldung: 17.07.2013
(73) Patentinhaber: Bayer Intellectual Property GmbH, 40789 Monheim (DE)
(72) Erfinder: MEYER ZU BERSTENHORST, Birgit, 51375 Leverkusen (DE); HALPAAP, Reinhard, 51519 Odenthal (DE); EISEN, Norbert, 50999 Köln (DE); PFEUFFER, Uwe, 51377 Leverkusen (DE)
(74) Vertreter: BIP Patents
(86) Internationale Anmeldenummer: PCT/EP2011/065218
(87) Internationale Veröffentlichungsnummer: WO 2012/031990

(56) Entgegenhaltungen:
- EP-A1- 2 336 211
- DE-A1- 4 203 754
- US-A- 6 054 499

## Beschreibung

Die Erfindung betrifft geschäumte, lichtechte Polyurethanintegralformteile sowie deren Verwendung.

Polyurethane (PUR) auf der Basis von Isocyanaten mit aromatengebundenen NCO-Gruppen neigen unter Lichteinwirkung bekanntlich zu Verfärbungen. Dies ist bei Außenanwendungen oder bei unter Lichteinwirkung stehenden Innenteilen ein Problem. Zur Herstellung von lichtbeständigen Formteilen ist daher eine Oberfläche mit entsprechenden Eigenschaften erforderlich.

Zur Herstellung von Polyurethanen (PUR) mit hoher Lichtbeständigkeit werden üblicherweise aliphatisch gebundene Isocyanate eingesetzt. Eine Verwendung solcher Isocyanate zur Herstellung lichtbeständiger PUR ist in EP 0379246 B1 beschrieben. Hier werden lichtbeständige Deckhäute, z.B. für die Anwendung auf Instrumententafeln hergestellt. Möglich ist die Fertigung von kompakten und geschäumten aliphatischen Häuten. Die Verwendung von Wasser als Treibmittel führt in den Schäumen zu relativ hoher, teilweise unerwünschter Härte, die im Bereich geringer Dichten sogar höhere Härten als die kompakten Häute zeigen. Zudem ist die Abstimmung der Katalyse von Treib- und Vernetzungsreaktion bei Verwendung von aliphatischen Isocyanaten meist problematisch. Hier muss oft mit bestimmten Metallkatalysatoren gearbeitet werden. Dementsprechend wird Wasser als Treibmittel ausgeschlossen.

Darüber hinaus sollen die Oberflächen im Innenbereich auch eine gewisse Schutzfunktion übernehmen, indem sie bei Beanspruchung eine weiche Tiefenhärte aufweist. Trotz aller Weichheit in der Tiefenhärte dürfen die Oberflächen jedoch nicht schnell beschädigt werden. Dieses wird durch eine verdichtete Oberfläche erzielt. Somit wird ein Integralschaum benötigt, der im Kern eine niedrigere Dichte als am Rand aufweist.

Die Tiefenhärte des Materials wird anhand der Penetrationsmessung bestimmt. Hierbei wird mit einem Penetrator (beispielsweise dem Cone Penetrometer- H-4236 der Firma *Humboldt)* bei 1400g Last und einer abgerundeten Penetrationsspitze mit einem Durchmesser von 3 mm frühestens nach 24 Stunden nach der Entformung bei Raumtemperatur die Eindringtiefe bestimmt. Kleine Werte (<0,5 mm) stehen für harte Systeme, größere Werte für weiche, eindrückbare Systeme. Somit besitzen Polyurethanbauteile mit weichelastischer Tiefenhärte Penetrationsmesswerte größer 0,5 mm Um wirklich von einem geschäumten Polyurethan im Sinne der Erfindung zu reden, darf die Freischaumdichte max. 450 kg/m³, bevorzugt max. 350 kg/m³ betragen.

In EP-A 0 652 250 und WO 2009 097990 werden Verfahren zur Herstellung von zelligen Polyurethanen aus Isocyanaten der Diphenylmethanreihe und Carbamat-Treibmitteln beschrieben. Bei Carbamatsystemen bzw. Kohlendioxid getriebenen PUR-Systemen ist die Tiefenhärte abhängig von der Oberflächenhärte. Somit besitzen weiche Systeme auch eine weiche, schnell zu verletzende Haut und Systeme mit einer höheren Oberflächendichte sind eher hart in der Tiefenhärte.

Wirklich gute Integralschäume, d.h. großer Dichteunterschied zwischen Kern und Haut, können durch den Einsatz von physikalischen Treibmitteln hergestellt werden. Hierbei wird genutzt, dass bei der Polyurethan-Reaktion Energie in Form von Wärme freigesetzt wird, die dazu führt, dass das bzw. die Treibmittel in die Gasphase übertreten und so einen Schaum bilden. Am Rand des Bauteils kann die Wärme jedoch über das Werkzeug abgeführt werden, wodurch dort kein Schaum gebildet wird und eine Oberflächenhaut mit einer höheren Dichte, als im Kern entsteht. Voraussetzung für eine gute Hautausbildung ist somit vor allem ein Temperaturunterschied zwischen Kern und Werkzeugwand der möglichst hoch sein sollte. Deshalb wird meist bei niedrigen Werkzeugtemperaturen verarbeitet.

Aliphatische Isocyanate sind bekanntlich deutlich unreaktiver als aromatische, weshalb deutlich mehr Energie der Rektion zugeführt werden muss. Somit werden häufig Werkzeugtemperaturen von 70-90°C benötigt, um die Reaktion überhaupt starten und zur Durchhärtung bringen zu können. Somit sollte eine Integralschaumausbildung im Vergleich zu aromatischen Systemen deutlich erschwert sein. Es ist demzufolge nicht verwunderlich, dass in den meisten Patenten zu Integralschäumen, in denen als Isocyanatkomponente sowohl aromatische als auch aliphatische Polyisocyanate angegeben werden, in den Beispielen lediglich aromatische Systeme verwendet werden, siehe z.B. DE 19836662, EP1219674, EP1282658, US2003225177. Es bleibt somit fraglich, ob derartige gute Ergebnisse auch mit aliphatischen Isocyanaten erreicht werden können.

Aus der DE 4 203 754 ist ein Verfahren zur Herstellung von Urethangruppen enthaltenden Formkörpern mit felligem Kern und verdichteter Randzone bekannt, die unter Verwendung von Aceton als Treibmittel geschäumt wurden.

Des Weiteren wird ein immer größerer Wert auf Sicherheit gelegt. Dabei wird gewünscht, mit möglichst wenig Gefahrstoffen umgehen zu müssen, was sowohl gesundheitliche als auch ökonomische Aspekte beinhaltet, da die Sicherheit durch zusätzliche Absaugungen, Einhausungen etc. garantiert werden muss. Aliphatische Polyisocyanate sind bekanntermaßen nur dann als toxisch bzw. gesundheitsschädlich anzusehen, wenn sie eine gewisse Menge an freiem Monomer enthalten (toxisch, Kennzeichnung T, bei Monomergehalten ≥2 Gew.-%, gesundheitsschädlich, Kennzeichnung Xn, bei Monomergehalten >0,5 Gew.-% und <2 Gew.-%). Somit sollte aus Sicherheitsgründen mit monomerarmen Systemen gearbeitet werden. Diese haben jedoch den Nachteil, dass sie einen deutlich niedrigeren NCO-Gehalt als die Monomere besitzen, z.B. in Form von Uretdionen, Isocyanuraten, Allophanaten, Biureten, Iminooxadiazindion- und/oder Oxadiazintrionstruktur oder in Form von Urethan- und Isocyanatgruppen enthaltenden Umsetzungsprodukten, sogenannten Isocyanat-Prepolymeren. Somit muss bei der Reaktion zu Polyurethanen deutlich mehr Isocyanatkomponente verwendet werden. Bei gleicher Formteildichte wird dadurch das Polyurethan verdünnt, d.h. es finden weniger neue Polyurethanreaktionen statt, als bei Verwendung von Monomeren. Da die für den Ausbau einer Integralstruktur benötigte Wärme durch die Reaktionswärme herbeigeführt wird, sollten monomerarme Systeme deutlich schlechter in der Lage sein, eine verdichtete Haut auszubilden.

Aufgabe der vorliegenden Erfindung war es daher, lichtechte Polyurethane in einem breiten Rohdichtebereich mit weichelastischer Tiefenhärte, z.B. für den Anwendungsbereich von Armaturentafeln, Türauskleidungen, Armlehnen und Konsolen zur Verfügung zu stellen sowie ein Verfahren zu deren Herstellung.

Überraschend konnte diese Aufgabe mit Polyurethanen gelöst werden, die aus monomerarmen (<0,5 Gew.-% Monomergehalt), modifizierten aliphatischen Isocyanaten und gegenüber Isocyanaten reaktiven kurz- und langkettigen Verbindungen unter Verwendung bestimmter physikalischer Treibmittel erhältlich sind.

Gegenstand der vorliegenden Erfindung sind geschäumte, lichtechte Polyurethanintegralformteile mit einer Freischaumdichte von höchstens 450Kg/m³ und einem Dichteunterschied zwischen Kern und Außenhaut des Formteils von mindestens 90kg/m³ erhältlich aus
A) organischen modifizierten (cyclo)aliphatischen Polyisocyanatverbindungen mit mindestens zwei Isocyanatgruppen, die nicht direkt an eine aromatische Gruppe gebunden sind, erhältlich aus monomeren (cyclo)aliphatischen Polyisocyanaten
B) Polyolen mit einem mittleren Molekulargewicht von 1.000 - 15.000 g/mol und einer Funktionalität von 2 bis 8,vorzugsweise von 2 bis 6,
C) Polyolen oder Polyaminen mit einem Molekulargewicht von 62 - 500 g/mol und einer Funktionalität von 2 bis 8, vorzugsweise 2 bis 4, als Kettenverlängerer/Vernetzer,
D) Treibmitteln,
E) gegebenenfalls weiteren Hilfs- und Zusatzstoffen,
dadurch gekennzeichnet, dass die Komponente A) einen Monomergehalt an (cyclo)aliphatischen Polyisocyanaten kleiner 0,5 Gew.-% aufweist und als Treibmittel D) physikalische Treibmittel aus der Gruppe bestehend aus (cyclo)aliphatischen Kohlenwasserstoffen mit bis zu 5 Kohlenstoffatomen, vorzugsweise mit 4 bis 5, besonders bevorzugt mit 5 Kohlenstoffatomen, teilhalogenierten Kohlenwasserstoffen oderteilhalogenierten Olefinen mit jeweils bis zu 5 Kohlenstoffatomen verwendet werden, die in einer Menge eingesetzt werden, so dass ein Freischaum mit einer Freischaumdichte von höchstens 450 kg/m³ erzeugt wird und so dass sich ein Dichteunterschied zwischen der Außenhaut und dem Kern des Formteils von mind. 90 kg/m³ einstellt.

Die Außenhaut ist für die Messung der Dichte definiert als äußere Schicht des Formteils mit einer Dicke von 1,5 mm

Zur Herstellung der modifizierten Polyisocyanatverbindungen A) werden (cyclo)aliphatische Polyisocyanate als Ausgangsverbindungen eingesetzt. Geeignete (cyclo)aliphatische Polyisocyanate sind vorzugsweise beliebige durch Phosgenierung oder nach phosgenfreien Verfahren, beispielsweise durch thermische Urethanspaltung, zugängliche Diisocyanate des Molekulargewichtsbereichs 140 bis 400 mit aliphatisch oder cycloaliphatisch gebundenen Isocyanatgruppen. Als (cyclo)aliphatische Verbindungen geeignet sind z. B. 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-dilsocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethyl-cyclohexan (Isophorondiisocyanat, IPDI), 4,4'-Diisocyanatodicyclohexylmethan (H₁₂-MDI, ggf. in Mischung mit dem 2,4'-Isomer), 1-Isocyanato-1-methyl-4(3)isocyanato-methylcyclohexan (IMCI), Bis-(isocyanatomethyl)-norboman (NBDI) oder beliebige Gemische solcher Diisocyanate. Die aus den monomeren (cyclo)aliphatischen Polyisocyanaten hergestellten modifizierten Verbindungen A) werden nach üblichen bekannten Verfahren hergestellt. Sie weisen erfindungsgemäß Monomer-Konzentrationen kleiner 0,5 Gew.-% auf und enthalten als Modifizierung beispielsweise Uretdion-, Isocyanurat-, Allophanat-, Biuret-, Iminooxadiazindion- und/oder Oxadiazintrionstrukturen, wie sie beispielsweise in J. Prakt. Chem. 336 (1994) 185 - 200, in DE-A 1 670 666 und EP-A 0 798 299 beispielhaft beschrieben sind. Als modifizierte Polyisocyanate A) können auch Urethan- und Isocyanatgruppen enthaltende Umsetzungsprodukte, sogenannte Isocyanat-Prepolymere und Carbodiimid-modifizierte Polyisocyanate eingesetzt werden. Die Polyisocyanate A) weisen vorzugsweise einen Isocyanatgehalt von 10 bis 30 Gew.-% auf. Bevorzugte, aber nicht ausschließliche modifizierte Polyisocyanate A) sind niederviskose Produkte auf der Basis von HDI mit einem Monomeranteil < 0,5 Gew.-%. Besonders bevorzugt werden Polyisocyanate auf Basis HDI, die Uretdion-Gruppen enthalten, und/oder Prepolymere auf Basis HDI eingesetzt. Ganz besonders bevorzugt werden Polyisocyanate auf Basis HDI, die Uretdion-Gruppen enthalten, und/oder Prepolymere auf Basis HDI eingesetzt, wobei die Komponente A insgesamt weniger als 5 Gewichtsprozent cycloalipatische Polyisocyanate enthält, da cycloaliphatische Polyisocyanate deutlich teurer, als Polyisocyanate auf Basis HDI sind.

Die Komponente B) weist eine mittlere Hydroxylfunktionalität von 2 bis 8 auf und besteht vorzugsweise aus mindestens einem Polyhydroxypolyether mit einem mittleren Molekulargewicht von 1.000 bis 15.000 g/mol, vorzugsweise 2.000 bis 13.000 g/mol und/oder mindestens einem Polyhydroxypolyester mit einem mittleren Molekulargewicht von 2.000 bis 10.000 g/mol, vorzugsweise 2.000 bis 8.000 g/mol und/oder mindestens einem Oligocarbonatpolyol mit einem mittleren Molekulargewicht von 1.000 - 5.000 g/mol.

Geeignete Polyhydroxypolyether sind die aus der Polyurethanchemie an sich bekannten Alkoxylierungsprodukte von vorzugsweise di- oder trifunktionellen Startermolekülen bzw. Gemischen derartiger Startermoleküle. Geeignete Startermoleküle sind beispielsweise Wasser, Ethylenglykol, Diethylenglykol, Propylenglykol, Trimethylolpropan, Glycerin und Sorbit. Zur Alkoxylierung eingesetzte Alkylenoxide sind insbesondere Propylenoxid und Ethylenoxid, wobei diese Alkylenoxide in beliebiger Reihenfolge und/oder als Gemisch zum Einsatz gelangen können. Ferner können als Komponente B) auch aliphatische Oligocarbonatpolyole mit einem mittleren Molekulargewicht von 1.000 bis 5.000 g/mol, bevorzugt 1.000 bis 2.000 g/mol verwendet werden. Geeignete aliphatische Oligocarbonatpolyole sind die an sich bekannten Umesterungsprodukte von monomeren Dialkylcarbonaten wie z.B. Dimethylcarbonat, Diethylcarbonat etc. mit Polyolen oder Mischungen von Polyolen mit einer OH-Funktionalität ≥ 2,0 wie z.B. 1,4-Butandiol, 1,3-Butandiol, 1,5-Pentandiol, 1,6-Hexandiol, 3-Methyl-1,5-pentandiol, 1,12-Dodecandiol, Cyclohexandimethanol, Trimethylolpropan und/oder Mischungen der genannten Polyole mit Lactonen, wie es beispielhaft in EP-A 1 404 740 und EP-A 1 518 879 A2 beschrieben ist.

Geeignete Polyesterpolyole sind die an sich bekannten, Hydroxylgruppen aufweisenden Veresterungsprodukte von vorzugsweise zweiwertigen Alkoholen, wie beispielsweise Ethylenglykol, Propylenglykol, Neopentylglykol, 1,4-Butandiol, 1,6-Hexandiol, mit unterschüssigen Mengen an vorzugsweise difunktionellen Carbonsäuren, wie beispielsweise Bernsteinsäure, Adipinsäure, Phthalsäure, Tetrahydrophthalsäure, Hexahydrophthalsäure oder Gemischen derartiger Säuren.

Bei der Komponente C) handelt es sich bevorzugt um difunktionelle Kettenverlängerungsmittel mit einem Molekulargewicht von 62 bis 500 g/mol, vorzugsweise 62 bis 400 g/mol. Zu den bevorzugten Kettenverlängerungsmitteln C) gehören zweiwertige Alkohole, wie beispielsweise Ethylenglykol, Diethylenglykol, 1,4-Butandiol, 1,6-Hexandiol oder Gemische derartiger Diole. Als Komponente C) bzw. als Teil der Komponente C) ebenfalls geeignet sind Ethergruppen aufweisende Diole mit Molekulargewichten von unter 400 g/mol, wie sie durch Propoxylierung und/oder Ethoxylierung von zweiwertigen Startermolekülen der bereits oben beispielhaft genannten Art zugänglich sind. Als Kettenverlängerungsmittel C) ebenfalls geeignet sind Diamine mit arylalkylständigen Aminogruppen, wie z.B. 1,3-Xylyendiamin. Ferner können auch Polycarbonatdiole verwendet werden, sofern ihr Molekulargewicht unterhalb 500 g/mol liegt. Beliebige Gemische der beispielhaft genannten Kettenverlängerungsmittel können ebenfalls eingesetzt werden. Die Kettenverlängerungsmittel C) Kettenverlängerungsmittel C) werden in Mengen von 2 bis 15, vorzugsweise 4 bis 12 Gew.-%, bezogen auf das Gewicht der Summe der Komponenten B), C), D) und E), eingesetzt.

Bei den erfindungswesentlichen Treibmitteln D) handelt es sich um Verbindungen der bereits oben genannten Klassen. Beispiele für cyclische Kohlenwasserstoffe sind Cyclopropan und Cyclopentan. Nicht cyclische Kohlenwasserstoffe sind u.a. Butan, n-Pentan und Isopentan. Unter halogenhaltigen Kohlenwasserstoffen werden Wasserstoff enthaltende Fluorchlorkohlenwasserstoffe oder Fluorkohlenwasserstoffe oder Perfluorverbindungen z. B. Perfluoralkane verstanden. Als Fluorchlorkohlenwasserstoffe sind z. B. Chlordifluormethan (R22), 1,1-Dichlor-1-fluorethan (R141b), 1-Chlor-1,1-difluorethan (R142b) oder 1,3-Dichlor-1,1,2,3,3,hexafluorpropan (R216a) einsetzbar. Beispiele für Fluorkohlenwasserstoffe sind Pentafluorethan (R125), 1,1,1-Trifluorethan (R143a), 1,1,1,2-Tetrafluorethan (R134a), 1,1,2-Trifluorethan (R143), 1,1-Difluorethan (R152a), 1,1,1,3,3-Pentafluorpropan (R245fa), Octafluorpropan (R218) oder 1,1,1,3,3-Pentafluorbutan (R365 mfc). Als teilhalogenierte Olefine werden z.B. trans-1,3,3,3 Tetrafluorprop-1-en (HFO-1234ze), 2,3,3,3-Tetrafluorprop-1-en (HFO-1234yf), FEA 1100 (1,1,1,4,4,4-Hexafluor-2-buten) und FEA 1200 verstanden. Mit Fokus auf die Sicherheit sind die Treibmittel bevorzugt zu verwenden, die nicht flammbar sind.

Bei der Herstellung der Polyurethane (PUR) wird das physikalische Treibmittel D) in einer Menge von 0,1 bis 10 Gew.-%, vorzugsweise 1 bis 8 Gew.-%, besonders bevorzugt 2 bis 7 Gew.-% bezogen auf das Gewicht der Summe der Komponenten B), C), D) und E), verwendet.

Als gegebenenfalls mit zu verwendende Hilfs- und Zusatzmittel E) werden Verbindungen der an sich bekannten Art verwendet. Dies sind die bei der Herstellung von Polyurethanschaumstoffen üblichen und bekannten Verbindungen, wie z.B. Katalysatoren, Stabilisatoren, Pigmenten, Füllstoffen oder auch Wasser, welches gegebenenfalls in einer Menge von bis zu 0,3 Gew.-%, bezogen auf das Gewicht der Komponente B), mit verwendet wird. Vorzugsweise wird die Herstellung der PUR jedoch ohne zugesetztes Wasser durchgeführt.

Als Katalysatoren können die für Polyurethan gängigen, bekannten Katalysatoren verwendet werden, die beispielsweise in WO 2008/034884 oder EP 0929586 aufgeführt. Dazu zählen sowohl Salze und Chelate von Zinn, Zink, Bismut, Eisen, Quecksilber als auch tertiäre Aminverbindungen. Organozinnverbindungen wie beispielsweise Dimethylzinn(IV)didodecylmercaptid, Dimethyl-zinn(IV)bis(2-ethylhexylthioglycolat), Dimethylzinn(IV)dimethylenisooctylestermercaptid, Dimethylzinn(IV)didecylmercaptid, Dimethylzinn(IV)butenyldicarboxylat, Dimethylzinn(IV)dilaurat Dimethylzinn(IV)di-(neo-decylcarboxylat) werden bevorzugt verwendet. Bevorzugt sollten nicht fungitive Katalysatoren eingesetzt werden.

Unter Stabilisatoren werden sowohl UV-Absorber, Antioxidantien, Radikalfänger als auch Schaumstabilisatoren verstanden. UV-Absorber können sowohl anorganische Verbindungen wie beispielsweise Titandioxid, Zinkoxid oder Cerdioxid sein, als auch organische Verbindungen, wie 2-Hydroxy-benzophenone, 2-(2-Hydroxyphenyl)benzotriazole, 2-(2-Hydroxyphenyl)-1,3,5-tri-azine, 2-Cyanacrylate und Oxalanilide. Zu den Radikalfängern zählen bekanntermaßen HALS - Systeme (Hindered Amine Light Stabilizer), als Antioxidatien können sterisch gehinderte Phenole und/oder sekundäre aromatische Amine verwendet werden. Schaumstabilisatoren bestehen meist aus Polyethersiloxanen oder Blockcopolymeren von Polyoxyalkylenen.

Unter Pigmenten und Füllstoffen werden z.B. Calciumcarbonat, Graphit, Russ, Titandioxid, Titandioxid, Eisenoxid, Wollastonit, Glasfasern, Kohlefasern und/oder auch organische Farbstoffe bzw. Füllstoffe verstanden.

Weitere Beispiele für die Komponente E) "Hilfs- und Zusatzstoffe" werden in "Kunststoffhandbuch 7 -Polyurethanes", Becker/Braun, Carl Hanser Verlag, Müchen / Wien, 1993, 104ff aufgeführt.

Die Ausgangskomponenten werden im Übrigen in solchen Mengen eingesetzt, dass eine Isocyanat-Kennzahl von 80 bis 120, vorzugsweise 95 bis 105, erhalten wird. Unter Isocyanat-Kennzahl versteht man den Quotienten aus der Anzahl der NCO-Gruppen geteilt durch die Anzahl der NCOreaktiven Gruppen multipliziert mit 100.

Zur Herstellung der PUR-Formteile werden im Allgemeinen die Komponenten B) bis E) zu einer "Polyolkomponente" vereinigt, die dann mit der Polyisocyanatkomponente A) vermischt und in geschlossenen Formen zur Reaktion gebracht wird. Hierbei bedient man sich üblicher Mess- und Dosiervorrichtungen.

Die Temperatur der Reaktionskomponenten (Polyisocyanatkomponente A) bzw. "Polyolkomponente" bestehend aus den Komponenten B), C), D) und E) liegt im Allgemeinen innerhalb des Temperaturbereichs von 20 bis 60°C. Die Temperatur der Formwerkzeuge liegt im Allgemeinen bei 20 bis 100°C, bevorzugt bei 50 bis 90°C.

Die Menge des in die Form eingetragenen schaumfähigen Materials wird so bemessen, dass Rohdichten der Formteile von 200 bis 700 kg/m³ resultieren.

Die Formteile werden beispielsweise als Lenkräder oder Türseitenverkleidungen sowie Instrumententafelabdeckungen oder allgemein als Schutzpolster im Autoinnenraum verwendet.

Die aliphatischen Schaumstoffe eignen sich als Verkleidung für Armaturentafeln, Konsolen, Verkleidungen von Türen oder Ablagen im Bereich von Fahrzeugen.

Die Erfindung soll anhand der nachfolgenden Beispiele näher erläutert werden.

### Beispiele

Die Prozentangaben in den Tabellen 1-3 beziehen sich auf das Gewicht.

### Polyisocyanat A1):

Isocyanurat- und Uretdiongruppen enthaltendes HDI wurde durch Tributylphosphin-katalysierte Oligomerisierung von HDI in Anlehnung an Beispiel 1a) der EP-A 0 377 177 hergestellt, allerdings wurde kein 2,2,4-Trimethyl-1,3-pentandiol mitverwendet. Die Reaktion wurde bei einem NCO-Gehalt der Rohlösung von 42 % abgebrochen und nicht umgesetztes HDI durch Dünnschichtdestillation bei einer Temperatur von 130°C und einem Druck von 0,2 mbar entfernt.

| | |
|---|---|
| NCO-Gehalt: | 22,7 % |
| NCO-Funktionalität: | 2,2 |
| monomeres HDI: | 0,3 % |
| Viskosität (23°C): | 90 mPas |

### Polyisocyanat A2):

7 mol 1,6-Diisocyanatohexan (HDI) und 1 mol eines Polypropylenoxiddiols mit einem gewichtsmittleren Molgewicht von 400 (OH-Zahl = 280) wurden bei 80 °C bis zum Erreichen eines konstanten NCO-Gehalts umgesetzt. Nachfolgend wurde der Überschuss an monomerem HDI durch Dünnschichtdestillation bei einer Temperatur von 130 °C und einem Druck von ca. 0,5 mbar entfernt.

| | |
|---|---|
| NCO-Gehalt: | 12,6 % |
| monomeres HDI: | 0,2 % |
| Viskosität (23°C): | 4250 mPas |

### Polyisocyanat I:

Gemisch aus 1 Gew.-Teil HDI und 1 Gew.-Teil Polyisocyanat A1).

### Polyisocyanat II:

Gemisch aus 1 Gew.-Teil Polyisocyanat A2) und 1 Gew.-Teil Polyisocyanat A1).

### Polyisocyanat III:

### Polyisocyanat A1).

### Polyol:

Polyetherpolyol mit einer OH-Zahl von 28; hergestellt durch Alkoxylierung von Sorbit mit Propylen-oxid/Ethylenoxid (PO/EO) im Gewichtsverhältnis 82:18 und überwiegend primären OH-Endgruppen.

Treibmittel: Die Treibmittel werden je nach Polyisocyanat so zugegeben, dass der Treibmittelgehalt jeweils ca. 3,6 Gew.-% bezogen auf sämtliche Einsatzstoffe beträgt.

Treibmittel I: HFC 245 fa [1,1,1,3,3-Pentafluorpropan der Firma Honeywell]

Treibmittel II: Isohexan

Treibmittel III: Pentan

In den nachstehenden Tabellen 1 bis 3 werden die Komponenten und eingesetzten Mengen für die Herstellung der Polyurethane beschrieben.

**Tabelle 1: Zusammensetzungen**

| **Beispiel** | **1** | **2*** | **3*** | **Komponente** |
|---|---|---|---|---|
| Polyol | 81,0 | 81,0 | 81,0 | B |
| Isophorondiamin (Kettenverlängerer) | 1,0 | 1,0 | 1,0 | C |
| Coscat 83 (Katalysator); der Firma Fa.Erbslöh KG | 0,5 | 0,5 | 0,5 | E |
| 1,4-Butandiol | 9,5 | 9,5 | 9,5 | C |
| Diethanolamin | 2,0 | 2,0 | 2,0 | C |
| Treibmittel I | 5,0 | 6,3 | 5,8 | D |
| Isocyanat I | 37,5 | - | - | A |
| Isocyanat II | - | 76,1 | - | A |
| Isocyanat III | - | - | 59,6 | A |

| | | | | |
|---|---|---|---|---|
| * erfindungsgemäß | | | | |

**Tabelle 2: Zusammensetzungen**

| **Beispiel** | **4** | **5** | **6** | **Komponente** |
|---|---|---|---|---|
| Polyol | 81,0 | 81,0 | 81,0 | B |
| Isophorondiamin (Kettenverlängerer) | 1,0 | 1,0 | 1,0 | C |
| Coscat 83 (Katalysator); der Firma Fa.Erbslöh KG | 0,5 | 0,5 | 0,5 | E |
| 1,4-Butandiol | 9,5 | 9,5 | 9,5 | C |
| Diethanolamin | 2,0 | 2,0 | 2,0 | C |
| Treibmittel II | 5,0 | 6,3 | 5,8 | D |
| Isocyanat I | 37,5 | - | - | A |
| Isocyanat II | - | 76,1 | - | A |
| Isocyanat III | - | - | 59,6 | A |

**Tabelle 3: Zusammensetzungen**

| **Beispiel** | **7** | **8*** | **9*** | **Komponente** |
|---|---|---|---|---|
| Polyol | 81,0 | 81,0 | 81,0 | B |
| Isophorondiamin (Kettenverlängerer) | 1,0 | 1,0 | 1,0 | C |
| Coscat 83 (Katalysator); der Firma Fa.Erbslöh KG | 0,5 | 0,5 | 0,5 | E |
| 1,4-Butandiol | 9,5 | 9,5 | 9,5 | C |
| Diethanolamin | 2,0 | 2,0 | 2,0 | C |
| Treibmittel III | 5,0 | 6,3 | 5,8 | D |
| Isocyanat I | 37,5 | - | - | A |
| Isocyanat II | - | 76,1 | - | A |
| Isocyanat III | - | - | 59,6 | A |

| | | | | |
|---|---|---|---|---|
| * erfindungsgemäß | | | | |

**Tabelle 4: Eigenschaften**

| **Beispiel** | **1** | **2*** | **3*** |
|---|---|---|---|
| Freischaumdichte [kg/m³] gemessen nach DIN EN ISO 845 | 176 | 304 | 311 |
| Gefahrstoffkennzeichnung Isocyanat / Treibmittel | T, N/- | Xi, N/- | Xi/- |
| Rohdichte Gesamt [kg/m³] gemessen nach DIN EN ISO 845 | 511 | 520 | 564 |
| Rohdichte Haut [kg/m³] gemessen nach DIN EN ISO 845 | 765 | 600 | 675 |
| Rohdichte Kern [kg/m³] gemessen nach DIN EN ISO 845 | 430 | 500 | 532 |
| Delta Rohdichte Haut - Kern [kg/m³] | 335 | 100 | 143 |
| Penetration 1400g, 3 mm Durchmesser Penetrationsspitze [mm] | 1,9 | 5,1 | 4,0 |

| | | | |
|---|---|---|---|
| * erfindungsgemäß | | | |

**Tabelle 5: Eigenschaften**

| **Beispiel** | **4** | **5** | **6** |
|---|---|---|---|
| Freischaumdichte [kg/m³] gemessen nach DIN EN ISO 845 | 246 | 470 | 480 |
| Gefahrstoffkennzeichnung Isocyanat / Treibmittel | T, N/F | Xi, N/F | Xi/F |
| Rohdichte Gesamt [kg/m³] gemessen nach DIN EN ISO 845 | 566 | - | - |
| Rohdichte Haut [kg/m³] gemessen nach DIN EN ISO 845 | 787 | - | - |
| Rohdichte Kern [kg/m³] gemessen nach DIN EN ISO 845 | 474 | - | - |
| Delta Rohdichte Haut - Kern [kg/m³] | 313 | - | - |
| Penetration 1400g, 3 mm Durchmesser Penetrationsspitze [mm] | 1,0 | | |

**Tabelle 6: Eigenschaften**

| **Beispiel** | **7** | **8*** | **9*** |
|---|---|---|---|
| Freischaumdichte [kg/m³] gemessen nach DIN EN ISO 845 | 123 | 180 | 196 |
| Gefahrstoffkennzeichnung Isocyanat / Treibmittel | T, N/F | Xi, N/F | Xi/F |
| Rohdichte Gesamt [kg/m³] gemessen nach DIN EN ISO 845 | 546 | 577 | 533 |
| Rohdichte Haut [kg/m³] gemessen nach DIN EN ISO 845 | 680 | 674 | 687 |
| Rohdichte Kern [kg/m³] gemessen nach DIN EN ISO 845 | 467 | 525 | 504 |
| Delta Rohdichte Haut - Kern [kg/m³] | 213 | 149 | 183 |
| Penetration 1400g, 3 mm Durchmesser Penetrationsspitze [mm] | 1,6 | 4,3 | 3,5 |

| | | | |
|---|---|---|---|
| * erfindungsgemäß | | | |

Die Formtemperatur betrug 70°C, die Formgröße betrug 100 x 100 x 20 mm. Die Temperatur der eingesetzten Komponenten lag bei Zimmertemperatur (25°C) für das Isocyanat und für die Polyolformulierung. Die Menge, die in die Form eingefüllt wurde, war so bemessen, dass die angegebene Rohdichte resultierte.

Versuche 1, 4 und 7 sind Vergleichsversuche, die eine große Menge an monomeren Diisocyanaten enthalten. Man erkennt eindeutig, dass diese mit jedem Treibmittel gut verschäumt werden können, da die Freischaumdichten weit unter den geforderten 450 kg/m³ liegen und eine gute Hautausbildung (Unterschied Rohdichte Haut zu Rohdichte Kern) von deutlich über 90 kg/m³ aufweisen. Diesen Vergleichsversuchen gemeinsam ist jedoch der erhebliche Nachteil, dass sie mit grossen Mengen niedermolekularer monomerer aliphatischer Diisocyanate hergestellt werden, die als gesundheitsschädliche, sensibilisierende oder sogar giftige Arbeitsstoffe eingestuft sind und zum Teil einen hohen Dampfdruck aufweisen. Die Verarbeitung dieser monomeren Diisocyanate erfordert aus Gründen der Arbeitshygiene einen großen sicherheitstechnischen Aufwand. Darüber hinaus besteht die Möglichkeit, dass insbesondere bei Verwendung eines Polyisocyanatüberschusses nicht abreagiertes monomeres Diisocyanat für längere Zeit im hergestellten Schaum verbleibt und aus diesem langsam ausdampfen kann.

Im Unterschied dazu sind die erfindungsgemäßen Kombinationen 2, 3, 8 und 9 und die Vergleichsversuche 5 und 6, in denen monomerarme Polyisocyanate verwendet werden, deutlich einfacher zu verarbeiten. Die Polyisocyanate weisen einen niedrigen Dampfdruck auf, die Umgebungsluft bei Verarbeitung ist nicht mit monomerem Diisocyanat belastet. Aus dem fertigen Teil kann nahezu kein monomeres Diisocyanat ausdampfen. Man erkennt jedoch, das die Kombinationen 5 und 6 je eine sehr hohe Freischaumdichte besitzen, das heißt wenig aufschäumen. Somit ist Isohexan als Treibmittel für Polyurethanschäume auf Basis von aliphatischen, monomerarmen Polyisocyanaten wenig geeignet.

Ansonsten zeigt sich, dass die Hautausbildung bei Verwendung monomerarmer Polyisocyanate im Unterschied zu den Vergleichsversuchen etwas erschwert ist, jedoch bei den erfindungsgemäßen Systemen 2, 3, 8 und 9 trotzdem eine ausreichende Verdichtung der Oberfläche vorliegt. Des Weiteren sind die erfindungsgemäßen Beispiele deutlich weicher (siehe Penetrationswerte).

In den Beispielen 2 und 3 wurde zudem ein nicht brennbares physikalisches Treibmittel eingesetzt, welches bzgl. des Sicherheitsaspektes auf der Polyolseite weitere Vorteile bringt.

Die Arbeitshygienisch gut handhabbaren erfindungsgemäß verwendeten Polyurethan-Systeme liefern weiche Schäume, die zudem eine ausreichende Hautausbildung aufweisen. Es ist allerdings zu berücksichtigen, dass die Ausbildung dieser weichen Schäume mit entsprechender Außenhaut nur mit den erfindungsgemäß verwendeten Treibmitteln gelingt. Mit Isohexan als Treibmittel gelingt dies trotz des Einsatzes der erfindungsgemäß verwendeten Polyisocyanate (Versuche 5 und 6) nicht.

## Patentansprüche

1. Geschäumte, lichtechte Polyurethanintegralformteile mit einer Freischaumdichte von höchstens 450kg/m³ und einem Dichteunterschied zwischen Kern und Außenhaut des Formteils von mindestens 90kg/m³ erhältlich aus
A) organischen modifizierten (cyclo)aliphatischen Polyisocyanatverbindungen mit mindestens zwei Isocyanatgruppen, die nicht direkt an eine aromatische Gruppe gebunden sind, erhältlich aus monomeren (cyclo)aliphatischen Polyisocyanaten
B) Polyolen mit einem mittleren Molekulargewicht von 1.000 - 15.000 g/mol und einer Funktionalität von 2 bis 8,vorzugsweise von 2 bis 6,
C) Polyolen oder Polyaminen mit einem Molekulargewicht von 62 - 500 g/mol und einer Funktionalität von 2 bis 8, vorzugsweise 2 bis 4, als Kettenverlängerer/Vernetzer,
D) Treibmitteln,
E) gegebenenfalls weiteren Hilfs- und Zusatzstoffen ,
**dadurch gekennzeichnet, dass** die Komponente A) einen Monomergehalt an (cyclo)aliphatischen Polyisocyanaten kleiner 0,5 Gew.-% aufweist und als Treibmittel D) physikalische Treibmittel aus der Gruppe bestehend aus (cyclo)aliphatischen Kohlenwasserstoffen mit bis zu 5 Kohlenstoffatomen, teilhalogenierten Kohlenwasserstoffen mit bis zu 5 Kohlenstoffatomen oder teilhalogenierten Olefinen mit bis zu 5 Kohlenstoffatomen verwendet werden, die in einer Menge eingesetzt werden, so dass ein Freischaum mit einer Freischaumdichte von höchstens 450 kg/m³ erzeugt wird und so dass sich ein Dichteunterschied zwischen der Außenhaut und dem Kern des Formteils von mind. 90 kg/m³ einstellt.

## Claims

1. Foamed lightfast polyurethane integral moldings having a free rise density of not more than 450 kg/m³ and a density difference of not less than 90 kg/m³ between the core and the skin of the molding, obtainable from
A) organic modified (cyclo)aliphatic polyisocyanate compounds having at least two isocyanate groups not bonded directly to an aromatic group, obtainable from monomeric (cyclo)aliphatic polyisocyanates,
B) polyols having an average molecular weight of 1000 - 15 000 g/mol and a functionality of 2 to 8, preferably of 2 to 6,
C) polyols or polyamines having a molecular weight of 62 - 500 g/mol and a functionality of 2 to 8, preferably of 2 to 4, as crosslinkers/chain extenders,
D) blowing agents,
E) optionally further, auxiliary and adjunct materials,
**characterized in that** said component A) has a monomer content below 0.5 wt% in respect of (cyclo)aliphatic polyisocyanates and blowing agent D) comprises physical blowing agents from the group consisting of (cyclo)aliphatic hydrocarbons having up to 5 carbon atoms, partially halogenated hydrocarbons having up to 5 carbon atoms or partially halogenated olefins having up to 5 carbon atoms being used in an amount so as to produce a free rise foam having a free rise density of not more than 450 kg/m³ and so as to produce a density difference of not less than 90 kg/m³ between the skin and the core of the molding.

## Revendications

1. Pièces moulées intégrales en polyuréthane expansées, stables à la lumière, ayant une densité de mousse libre d'au maximum 450 kg/m³ et une différence de densité entre coeur et peau externe de la pièce moulée d'au moins 90 kg/m³, pouvant être obtenues à partir
A) de composés organiques polyisocyanate (cyclo)aliphatiques modifiés comportant au moins deux groupes isocyanate qui ne sont pas liés directement à un groupe aromatique, pouvant être obtenus à partir de polyisocyanates (cyclo)aliphatiques monomères,
B) de polyols ayant une masse moléculaire moyenne de 1 000 à 15 000 g/mole et une fonctionnalité de 2 à 8, de préférence de 2 à 6,
C) de polyols ou polyamines ayant une masse moléculaire de 62 - 500 g/mole et une fonctionnalité de 2 à 8, de préférence de 2 à 4, en tant que prolongateur de chaîne/agent de réticulation,
D) d'agents porogènes,
E) éventuellement d'autres adjuvants et additifs,
**caractérisées en ce que** le composant A) présente une teneur en monomères polyisocyanates (cyclo)aliphatiques inférieure à 0,5 % en poids et on utilise comme agent porogène D) des agents porogènes physiques choisis dans le groupe constitué par des hydrocarbures (cyclo)aliphatiques ayant jusqu'à 5 atomes de carbone, des hydrocarbures partiellement halogénés ayant jusqu'à 5 atomes de carbone ou des oléfines partiellement halogénées ayant jusqu'à 5 atomes de carbone, qui sont utilisés en une quantité telle qu'une mousse libre ayant une densité de mousse libre d'au maximum 450 kg/m³ est produite et qu'il s'établit une différence de densité entre la peau externe et le coeur de la pièce moulée d'au moins 90 kg/m³.
